# FASCICULE DE BREVET EUROPEEN

(11) **EP 3 971 510 B1**
(45) Date de publication et mention de la délivrance du brevet: **08.05.2024**
(21) Numéro de dépôt: 21195754.3
(22) Date de dépôt: 09.09.2021
(51) Int. Cl.: F28D 7/00, F02B 29/04, F02M 26/24

(54) **MODULE DE TRAITEMENT THERMIQUE POUR MOTEUR À COMBUSTION INTERNE**
WÄRMEBEHANDLUNGSMODUL FÜR VERBRENNUNGSMOTOR
THERMAL TREATMENT MODULE FOR AN INTERNAL COMBUSTION ENGINE

(30) Priorité: 22.09.2020 FR 2009610
(43) Date de publication de la demande: 23.03.2022
(73) Titulaire: NEW H POWERTRAIN HOLDING, S.L.U., 47008 Valladolid (ES)
(72) Inventeur: DUBOIS, Sylvain, 78400 CHATOU (FR); LAVABRE, Guilhem, 92420 vaucresson (FR); VENEZIANI, Thomas, 83130 LA GARDE (FR)
(74) Mandataire: Renault Group

(56) Documents cités:
- EP-A1- 3 217 006
- EP-A1- 3 514 365
- FR-A1- 2 983 533
- FR-A1- 3 049 312
- FR-A1- 3 079 880

## Description

La présente invention concerne module de traitement thermique pour un moteur à combustion interne de véhicule, notamment de véhicule automobile, ainsi que ledit moteur à combustion interne. Egalement, la présente invention concerne un procédé de fonctionnement dudit moteur à combustion interne et un véhicule comprenant le module de traitement thermique et/ou le moteur à combustion interne.

FR3079880 divulgue un module de traitement thermique pour moteur à combustion interne, le module de traitement thermique comprenant un boîtier primaire délimitant un volume primaire, destiné à la circulation d'un fluide de refroidissement, incluant une pluralité de compartiments , le module de traitement thermique
- un premier compartiment destiné à mettre en oeuvre un échange thermique entre un premier flux, notamment un flux de gaz d'admission, et le fluide de refroidissement ;
- un deuxième compartiment destiné à mettre en oeuvre un échange thermique entre un deuxième flux de gaz EGR, et le fluide de refroidissement ;
- un troisième compartiment destiné à la circulation du deuxième flux de gaz EGR
- le module de traitement thermique comprenant un dispositif de contrôle de la circulation du deuxième flux de gaz EGR configuré pour diriger sélectivement le deuxième flux dans le troisième compartiment ou dans le deuxième compartiment.

Afin de réduire des rejets de polluants générés par les moteurs thermiques, ou moteurs à combustion interne, lors de la combustion, ceux-ci comprennent classiquement un circuit de recirculation configuré pour ramener des gaz brûlés de l'échappement, c'est-à-dire en aval de la combustion dans des cylindres du moteur thermique, vers des conduits d'admission du moteur. Lesdits gaz sont qualifiés de gaz recirculés ou gaz EGR, de l'acronyme anglais « Exhaust Gaz Recirculation », et peuvent, par exemple, consister en des gaz recirculés haute pression ou basse pression.

Selon les phases de fonctionnement du moteur, les gaz recirculés peuvent passer ou non par un module de traitement thermique, notamment de refroidissement, disposé en amont de l'admission et dans lequel circule un fluide de refroidissement. De manière connue, un volet de dérivation, ou « by-pass » en anglais, est agencé dans le circuit de recirculation en amont du module de traitement thermique afin de diriger les gaz recirculés vers une conduite de dérivation et contourner sélectivement ledit module de traitement thermique, par exemple lors de phases de fonctionnement à froid du moteur à combustion interne.

Un tel arrangement s'accompagne d'une augmentation conséquente de l'encombrement du groupe motopropulseur qui comprend le moteur à combustion interne et les divers accessoires nécessaires à son fonctionnement, le rendant peu compatible avec les contraintes, notamment esthétiques, imposées par les constructeurs.

Additionnellement, il a été constaté que la mise en oeuvre d'un échange thermique entre le flux de gaz recirculés et un fluide de refroidissement présentant une température trop basse résulte en la génération d'encrassements colmatant susceptibles d'entraver le bon fonctionnement du module de traitement thermique.

L'invention s'inscrit dans ce contexte et vise à résoudre ces différents problèmes. A cette fin, l'invention porte sur un module de traitement thermique pour moteur à combustion interne selon la revendication 1.

Le troisième compartiment peut être disposé au contact thermique d'au moins le premier compartiment. Particulièrement, le troisième compartiment peut être interposé entre le premier compartiment et le deuxième compartiment.

Selon une caractéristique optionnelle, le troisième compartiment peut comprendre une première extrémité et/ou une deuxième extrémité ouverte(s), le troisième compartiment étant fluidiquement relié au deuxième compartiment en amont et en aval selon un sens de circulation du deuxième flux.

Selon une caractéristique optionnelle, le boîtier secondaire peut comprendre d'une part une première conduite d'alimentation et une première conduite d'évacuation, fluidiquement reliées au premier compartiment, et d'autre part une deuxième conduite d'alimentation et une deuxième conduite d'évacuation, fluidiquement reliées au deuxième compartiment et au troisième compartiment.

Particulièrement, la deuxième conduite d'alimentation peut être reliée au deuxième compartiment et au troisième compartiment par une portion de répartition et/ou la deuxième conduite d'évacuation peut être reliée au deuxième compartiment et au troisième compartiment par une portion de collecteur.

Optionnellement, le boîtier secondaire peut comprendre au moins une première paroi interne intermédiaire délimitant au moins en partie d'une part le premier compartiment et d'autre part le troisième compartiment.

Selon une caractéristique optionnelle, le boîtier secondaire peut comprendre au moins une première paroi secondaire et une deuxième paroi secondaire, le troisième compartiment s'étendant sur tout ou l'essentiel d'une hauteur interne du boîtier secondaire comprise entre une première face interne et une deuxième face interne de la première paroi secondaire et de la deuxième paroi secondaire respectivement.

Selon une caractéristique optionnelle, le boîtier secondaire peut comprendre au moins une première paroi extrêmale secondaire et une deuxième paroi extrémale secondaire, le troisième compartiment s'étendant sur au moins l'essentiel d'une longueur interne du boîtier secondaire comprise entre une première face extrême interne et une deuxième face extrême interne de la première paroi extrêmale secondaire et de la deuxième paroi extrêmale secondaire respectivement.

Selon une caractéristique optionnelle, le premier compartiment, le deuxième compartiment et le troisième compartiment peuvent respectivement être caractérisés par une première largeur, une deuxième largeur et une troisième largeur, mesurées le long d'une direction Oy, la troisième largeur étant supérieure à 30% de la première largeur et/ou de la deuxième largeur sans excéder ladite/lesdites première largeur et/ou deuxième largeur.

Selon une caractéristique optionnelle, le premier compartiment et/ou le deuxième compartiment peu(ven)t comprendre une pluralité de passages destinés à la circulation du premier flux et du deuxième flux respectivement.

Le dispositif de contrôle peut être disposé dans le volume primaire, notamment dans le boîtier secondaire disposé dans le volume primaire. Notamment, le dispositif de contrôle peut comprendre un volet monté pivotant.

L'invention concerne également un moteur à combustion interne comprenant un module de traitement thermique tel que précédemment exposé.

L'invention concerne, en outre, un véhicule automobile comprenant un module de traitement thermique et/ou un moteur à combustion interne tel qu'exposé précédemment.

L'invention concerne enfin un procédé de fonctionnement d'un moteur à combustion interne selon la revendication 16.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
[Fig. 1] La figure 1 est une représentation schématique d'une partie d'un mode de réalisation d'un moteur à combustion selon l'invention.
[Fig. 2] La figure 2 représente une vue en perspective schématique d'un mode de réalisation d'un module de traitement thermique du moteur à combustion interne.
[Fig. 3] La figure 3 est une vue de dessus en coupe longitudinale du module de traitement thermique.
[Fig. 4] La figure 4 est une vue en perspective d'une partie centrale du module de traitement thermique.
[Fig. 5] La figure est une vue de face de la partie centrale illustrée à la figure 4.
[Fig. 6] La figure 6 est une représentation schématique du module de traitement thermique lorsque le moteur à combustion interne met en oeuvre un premier mode de fonctionnement.
[Fig. 7] La figure 7 est une représentation schématique du module de traitement thermique lorsque le moteur à combustion interne met en oeuvre un deuxième mode de fonctionnement.

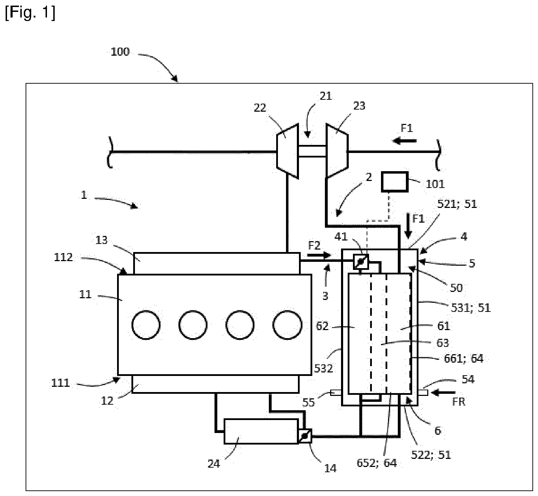

La figure 1 est une représentation schématique d'une partie d'un véhicule 100, notamment d'un véhicule 100 automobile, comprenant un moteur 1 à combustion interne selon un mode de réalisation destiné à un véhicule 100, en particulier un véhicule 100 automobile.

Le moteur 1 à combustion interne comprend un carter-cylindres (non représenté) et une culasse 11 fixée à celui-ci. La culasse 11 comprend une face d'admission 111, par laquelle entre un premier flux F1, et une face d'échappement 112, par exemple opposée à la face d'admission 111, de laquelle sont évacués, après combustion, des gaz brûlés.

Notamment, le premier flux F1 consiste en un flux de gaz d'admission, ou flux d'air d'admission. Ledit air peut être capté depuis l'extérieur du véhicule 100, en général au niveau de la face avant du véhicule 100. De manière alternative, un tel flux d'air peut être issu d'un pavillon du véhicule 100, d'une aile arrière ou, plus généralement, de toutes zones du véhicule 100 susceptibles d'être balayées par un flux d'air extérieur. Il est entendu que les termes « premier flux F1 », « flux de gaz d'admission », ou « flux d'air d'admission » seront utilisés sans distinction dans l'ensemble de la description ci-après.

Le moteur 1 à combustion interne comprend un circuit d'admission 2 relié à la face d'admission 111 de la culasse 11 et configuré pour assurer la circulation d'au moins le premier flux F1. Particulièrement, le circuit d'admission 2 peut être relié à un ou plusieurs conduits d'admission et/ou, tel qu'illustré, à un répartiteur d'admission 12 fixé à la culasse 11.

Le circuit d'admission 2 comprend un dispositif de compression 21 destiné à comprimer le premier flux préalablement à son entrée par la face d'admission 111. En l'espèce, le dispositif de compression 21 consiste en un turbocompresseur comprenant une turbine 22 dont un axe de rotation est confondu avec un axe de rotation d'un compresseur 23 d'air d'admission. De manière alternative, le dispositif de compression 21 peut consister en un compresseur électrique.

Le circuit d'admission 2 comprend également un échangeur de chaleur 24 configuré pour mettre en oeuvre un échange thermique entre le premier flux F1 et un circuit d'eau, par exemple de l'eau glycolée, non représenté. L'échangeur de chaleur 24 est disposé en amont de la face d'admission 111 selon le sens de circulation du premier flux F1. Particulièrement, l'échangeur de chaleur 24, est disposé entre le dispositif de compression 21 et la face d'admission 111 de sorte à permettre le traitement thermique, notamment le refroidissement, du premier flux F1 comprimé. De manière préférentielle, l'échangeur de chaleur 24 est agencé dans le circuit d'admission 2 entre le dispositif de compression 21 et le répartiteur d'admission 12.

De manière alternative, non illustrée, l'échangeur de chaleur 24 peut comprendre le répartiteur d'admission 12. L'échangeur de chaleur 24 peut alors être fixé sur la face d'admission 111 et connecté avec des conduits d'admission creusés dans la culasse 11 et menant à une pluralité de chambres de combustion.

Pour répondre aux normes actuelles de dépollution, les gaz brûlés sortant par la face d'échappement 112 peuvent être réinjectés à l'admission. A cette fin, le moteur 1 à combustion interne selon l'invention comprend un circuit de recirculation 3 relié à la face d'échappement 112 de la culasse 11 et configuré pour assurer la circulation d'un deuxième flux F2 qui consiste en lesdits gaz brûlés, également indistinctement qualifiés de gaz recirculés ou de gaz EGR, tiré de l'anglais « Exhaust Gas Recirculation ». Il est entendu que, dans l'ensemble de la description ci-après, les termes « amont » et « aval » se réfèrent au sens d'écoulement des premier flux F1 et deuxième flux F2 dans le moteur 1 à combustion interne.

De manière particulière, les gaz recirculés formant le deuxième flux peuvent consister en des gaz haute pression et haute température prélevés directement depuis un collecteur d'échappement 13 disposé au niveau de la face d'échappement 112 de la culasse 11.

Lors du fonctionnement du moteur 1 à combustion interne les gaz recirculés circulent à hautes températures, par exemple de l'ordre de 700°C. Il peut donc être nécessaire d'assurer leur refroidissement préalablement à leur réadmission dans les conduits d'admission d'air. Notamment, le moteur 1 à combustion interne est configuré pour mettre en oeuvre une pluralité de modes de fonctionnement distincts, lesdits modes de fonctionnement pouvant s'accompagner d'un refroidissement à des degrés variables du deuxième flux F2.

Similairement, il peut être nécessaire d'assurer le refroidissement du premier flux F1, c'est-à-dire des gaz d'admission, préalablement à son arrivée dans les conduits d'admission. Néanmoins, l'échangeur de chaleur 24 tel que précédemment décrit peut ne pas être suffisant et/ou son fonctionnement peut s'accompagner d'importantes pertes énergétiques. Aussi, il est classiquement connu d'intégrer un système de pré-refroidissement du premier flux F1, disposé en amont de l'échangeur de chaleur 24.

Afin d'au moins assurer d'une part le pré-refroidissement du premier flux F1 et d'autre part le refroidissement du deuxième flux F2, le moteur 1 à combustion interne comprend un module de traitement thermique 4 selon l'invention.

Le module de traitement thermique 4 comprend un boîtier primaire 5 délimitant un volume primaire 50, destiné à la circulation d'un fluide de refroidissement FR tel que de l'eau glycolée.

Le module de traitement thermique 4 comprend également un boîtier secondaire 6 s'étendant au moins en partie dans le volume primaire 50 et comprenant une pluralité de compartiments, notamment au moins un premier compartiment 61, un deuxième compartiment 62 et un troisième compartiment 63. En d'autres termes, le boîtier secondaire 6 et les différents compartiments 61, 62, 63 qu'il comprend sont au moins en partie logés dans le boîtier primaire 5 de sorte à baigner dans le fluide de refroidissement FR. Notamment, lesdits compartiments peuvent être distincts et hermétiques les uns des autres au sein du boîtier secondaire 6. Particulièrement, au moins le premier compartiment 61 peut être distinct et hermétique du deuxième compartiment 62 et du troisième compartiment 63 au sein du boîtier secondaire 6.

Le premier compartiment 61 est destiné à mettre en oeuvre un échange thermique entre le premier flux F1 le fluide de refroidissement FR. Autrement dit, le premier compartiment est destiné à la circulation et au traitement thermique, notamment au pré-refroidissement, du premier flux F1.

Le deuxième compartiment 62 est, quant à lui, destiné à mettre en oeuvre un échange thermique entre le deuxième flux F2 et le fluide de refroidissement. Le deuxième compartiment 62 est ainsi destiné à la circulation et au traitement thermique du deuxième flux F2.

Enfin, le troisième compartiment 63 est destiné à la circulation du deuxième flux F2 et est apte à assurer une isolation thermique du premier compartiment 61 vis-à-vis du deuxième compartiment 62 à l'atteinte d'un seuil de température prédéterminé, notamment à l'atteinte d'un seuil de température prédéterminé du moteur 1 à combustion interne. A titre d'exemple non limitatif, une telle température peut être une température du fluide de refroidissement du moteur à combustion interne.

En d'autres termes, tel que davantage exposé ci-après, un tel troisième compartiment 63 est apte à limiter, voire prévenir, un échange thermique entre le premier flux F1, circulant dans le premier compartiment 61, et le deuxième flux F2, circulant alors dans le deuxième compartiment 62.

Notamment, le module de traitement thermique 4 selon l'invention est configuré de sorte à mettre en oeuvre une telle circulation du deuxième flux F2 ou une telle isolation de manière consécutive, c'est-à-dire que de telles fonctions ne sont pas exécutées concomitamment par ledit module.

Lorsque le module de traitement thermique 4 est installé dans le moteur 1 à combustion interne, le premier compartiment 61 est compris dans le circuit d'admission 2 et disposé entre le dispositif de compression 21 et la face d'admission 111. Plus particulièrement, le premier compartiment 61 est disposé entre le dispositif de compression 21 et l'échangeur de chaleur 24. Le deuxième compartiment 62 et le troisième compartiment 63 du module de traitement thermique 4 sont compris dans le circuit de recirculation 3.

Avantageusement, le module de traitement thermique 4 comprend un dispositif de contrôle 41, notamment mobile, de la circulation du deuxième flux F2 configuré pour diriger sélectivement le deuxième flux F2 dans le troisième compartiment 63 ou dans le deuxième compartiment 62 selon le mode de fonctionnement mis en oeuvre par le moteur 1 à combustion interne.

Avantageusement et afin de limiter l'encombrement généré par le module de traitement thermique 4, le dispositif de contrôle 41 est disposé dans le volume primaire 50. De manière particulière, le dispositif de contrôle 41 est logé dans le boîtier secondaire 6 lui-même au moins en partie disposé dans le volume primaire 50.

A titre d'exemple, le dispositif de contrôle 41 peut comprendre un volet monté pivotant. Ledit volet est apte à obturer ou ouvrir un passage du deuxième flux F2 de gaz dans le deuxième compartiment et, de façon simultanée et inverse, à ouvrir ou obturer un passage du deuxième flux F2 de gaz dans le troisième compartiment.

Additionnellement, le moteur 1 à combustion interne comprend un ensemble de contrôle, non représenté, configuré pour diriger les déplacements du dispositif de contrôle 41 selon le mode de fonctionnement mis en oeuvre par le moteur 1 à combustion interne. Un tel ensemble de contrôle peut, par exemple, comprendre un capteur tel qu'un capteur de température et/ou de pression, et un calculateur 101.

Ainsi, le moteur 1 à combustion interne selon l'invention est configuré pour mettre en oeuvre une pluralité de modes de fonctionnements et comprend au moins le circuit d'admission 2 configuré pour assurer la circulation d'au moins le premier flux F1, le circuit de recirculation 3 configuré pour assurer la circulation du deuxième flux, et le module d'échange thermique 4 :
- le premier compartiment 61 étant compris dans le circuit d'admission 2,
- le deuxième compartiment 62 et le troisième compartiment 63 étant compris dans le circuit de recirculation,
- le dispositif de contrôle 41 de la circulation du deuxième flux dirigeant sélectivement le deuxième flux F2 vers le troisième compartiment 63 ou vers le deuxième compartiment 62 selon le mode de fonctionnement mis en oeuvre par le moteur 1 à combustion interne.

De la sorte, le module de traitement thermique 4 est assimilable à une combinaison d'une pluralité d'échangeurs thermiques fonctionnant sélectivement selon le mode de fonctionnement mis en oeuvre par le moteur à combustion interne 1. Notamment, il peut être modélisé comme une combinaison:
- d'un premier échangeur thermique, configuré entre le premier compartiment et le fluide de refroidissement FR pour mettre en oeuvre un échange thermique entre le premier flux F1 et le fluide de refroidissement FR,
- d'un deuxième échangeur thermique, configuré entre le deuxième compartiment et le fluide de refroidissement FR pour mettre en oeuvre un échange thermique entre le deuxième flux F2 et le fluide de refroidissement, et
- d'un troisième échangeur thermique, configuré pour mettre en oeuvre un échange thermique entre le premier compartiment et le troisième compartiment.

Il est à noter que, de préférence, le coefficient d'échange thermique entre le troisième compartiment et le fluide de refroidissement FR est inférieur au coefficient d'échange thermique entre le deuxième compartiment 62 et le fluide de refroidissement FR.

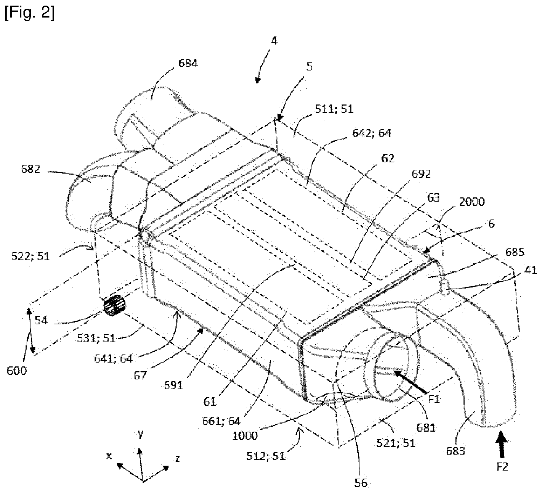

Les figures 2 à 6 illustrent plus en détails un mode de réalisation du module de traitement thermique 4 selon l'invention. Dans ces figures, le boîtier primaire 5 est représenté schématiquement en lignes pointillées et en transparence afin de rendre visible le boîtier secondaire 6 et le sens de circulation des différents flux est illustré schématiquement par des flèches.

L'ensemble des figures et de la description ci-après se réfèrent à une orientation du module de traitement thermique 4 définie selon une première direction, une deuxième direction et une troisième direction. La première direction correspond à une direction d'extension d'au moins une partie d'une conduite du module le long d'un axe Ox d'un repère Oxyz. Particulièrement, l'axe Ox est parallèle à un axe d'écoulement des flux notamment des gaz, au sein du module de traitement thermique. La deuxième direction est définie par un axe Oz du repère, orthogonal à l'axe Ox. La troisième direction est définie par un axe Oy du repère, perpendiculaire aux première et deuxième directions et passant, dans les exemples illustrés, par chacun des différents compartiments du module de traitement thermique 4.

Egalement, il est entendu que les termes « primaire », « secondaire », « premier », « deuxième » visent à distinguer les différents composants de l'invention et n'ont en rien vocation à déterminer une hiérarchie desdits composants.

Le boîtier primaire 5 comprend une pluralité de paroi primaires 51 délimitant le volume primaire 50 dans lequel, d'une part, circule le fluide de refroidissement FR et, d'autre part, est disposé au moins partiellement le boîtier secondaire 6.

Particulièrement, dans l'exemple illustré le boîtier primaire 5 présente, de manière non limitative, une structure sensiblement parallélépipédique et oblongue. Il comprend une première paroi primaire 511 et une deuxième paroi primaire 512. Celles-ci sont reliées entre elles par une première paroi extrémale primaire 521 et une deuxième paroi extrémale primaire 522 qui délimitent le boîtier primaire 5 le long de la première direction Ox. Le boîtier primaire 5 comprend également une première paroi latérale primaire 531 et une deuxième paroi latérale primaire 532, délimitant le boîtier primaire 5 le long de la troisième direction Oy.

Le boîtier primaire 5 comprend une tubulure d'alimentation 54 et une tubulure d'évacuation 55 assurant respectivement l'entrée et la sortie du fluide de refroidissement FR dans le volume primaire 50. Dans le mode de réalisation représenté, lesdites tubulures 54, 55 sont respectivement portées par la première paroi latérale primaire 531 et la deuxième paroi latérale primaire 532. Il est néanmoins entendu qu'un tel agencement n'est en rien limitatif et que lesdites tubulures 54, 55 peuvent être comprises dans une même paroi du boîtier ou dans des parois distinctes, que celles-ci soient adjacentes ou opposées.

Similairement, le boîtier secondaire 6 comprend une pluralité de parois secondaires 64. Particulièrement, selon l'exemple non limitatif illustré, le boîtier secondaire 6 présente une structure sensiblement parallélépipédique.

Il comprend une première paroi secondaire 641 et une deuxième paroi secondaire 642, lesquelles sont reliées entre elles par une première paroi extrêmale secondaire 651 et une deuxième paroi extrêmale secondaire 652 qui délimitent le boîtier secondaire 6 le long de la première direction Ox. Le boîtier secondaire 6 comprend également une première paroi latérale secondaire 661 et une deuxième paroi latérale secondaire 662, délimitant le boîtier secondaire 6 le long de la troisième direction Oy.

L'ensemble de ces parois secondaires 64 délimite une partie centrale 67 du boîtier secondaire 6 dans lequel s'étendent essentiellement le premier compartiment 61, le deuxième compartiment 62 et le troisième compartiment 63 tels que précédemment exposés. Notamment, lesdits compartiments sont sensiblement oblongs et s'étendent parallèlement à l'axe Ox, c'est-à-dire à l'axe d'écoulement des gaz.

Afin de raccorder fluidiquement le module de traitement thermique 4 au circuit d'admission 2 et au circuit de recirculation 3, le boîtier secondaire 6 comprend une pluralité de conduites émergeant de la partie centrale 67 du boîtier secondaire 6.

Le boîtier secondaire 6 comprend d'une part une première conduite d'alimentation 681 et une première conduite d'évacuation 682, fluidiquement reliées au premier compartiment 61, et d'autre part une deuxième conduite d'alimentation 683 et une deuxième conduite d'évacuation 684, fluidiquement reliées au deuxième compartiment 62 et au troisième compartiment 63.

La première conduite d'alimentation 681 et la deuxième conduite d'alimentation 683 d'une part et la première conduite d'évacuation 682 et la deuxième conduite d'évacuation 684 d'autre part émergent particulièrement de parois secondaires 64 opposées au sein du boîtier secondaire 6, en l'espèce, de la première paroi extrêmale secondaire 651 et de la deuxième paroi extrêmale secondaire 652 respectivement.

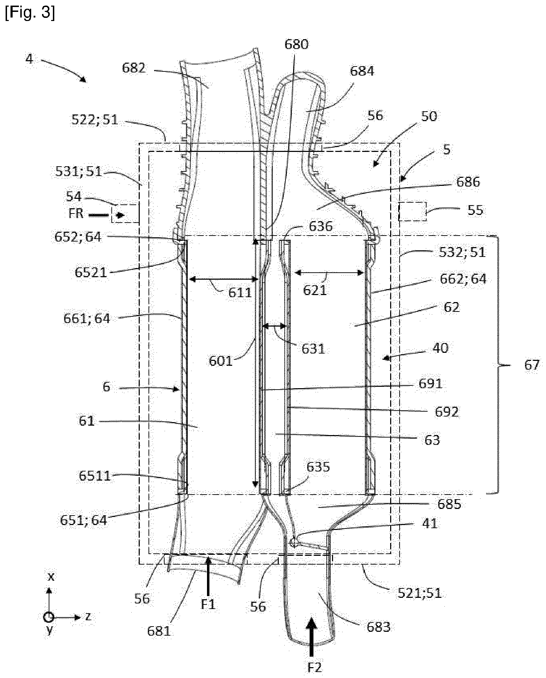

Particulièrement, et tel que visible aux figures 2 ou 3, la deuxième conduite d'alimentation 683 peut être reliée au deuxième compartiment 62 et au troisième compartiment 63 par une portion de répartition 685, c'est-à-dire un élargissement permettant la répartition du deuxième flux F2 dans le deuxième compartiment 62 et/ou dans le troisième compartiment 63. Similairement, la deuxième conduite d'évacuation 684 peut être reliée au deuxième compartiment 62 et au troisième compartiment 63 par une portion de collecteur 686, c'est-à-dire une portion se réduisant progressivement de sorte à collecter le deuxième flux F2 sortant de l'un et/ou de l'autre desdits compartiments.

Tel qu'illustré, les conduites d'alimentation 681, 683 et/ou les conduites d'évacuation 682, 684 sont rapportées et montées fixes, par exemple par soudage, sur la partie centrale 67 du module de traitement thermique 4.

De manière particulière, au moins la partie centrale 67 du boîtier secondaire 6 forme un ensemble monobloc. En d'autres termes, le premier compartiment 61, le deuxième compartiment 62 et le troisième compartiment 63 sont compris dans un même ensemble monobloc, c'est-à-dire qu'ils ne peuvent être séparés les uns des autres sans résulter en l'altération ou en la destruction du boîtier secondaire 6. De manière optionnelle au moins l'une des différentes conduites d'alimentation 681, 683 et/ou d'évacuation 682, 684 peut former, avec la partie centrale 67 du boîtier secondaire 6, un ensemble monobloc. De préférence encore, le dispositif de contrôle 41 est fixé à demeure à un tel ensemble monobloc, le tout formant le module de traitement thermique 4.

Ainsi, au sein du module de traitement thermique 4, les parois primaires 51 du boîtier primaire 5 et les parois secondaires 65 du boîtier secondaire 6 s'étendent au moins en partie à distance non nulle les unes des autres de sorte à délimiter un espace de circulation 40 du fluide de refroidissement FR au sein du volume primaire 50 qui entoure tout ou partie du boîtier secondaire 6.

Egalement, le boîtier primaire 5 comprend une pluralité d'ouvertures 56 destinés au passage des différentes conduites 681-684 du boîtier secondaire 6. Avantageusement, lesdites ouvertures 56 sont équipées d'un organe d'étanchéité, non représenté, tel qu'un joint. De manière préférentielle, lesdites ouvertures 56 sont comprises dans des parois primaires 51 distinctes de celles portant les tubulures 54, 55.

Selon une alternative non illustrée visant à réduire l'encombrement généré par le module de traitement thermique 4, les ouvertures 56 et les tubulures 54, 55 sont comprises dans une même paire de parois primaires 51 opposées l'une à l'autre.

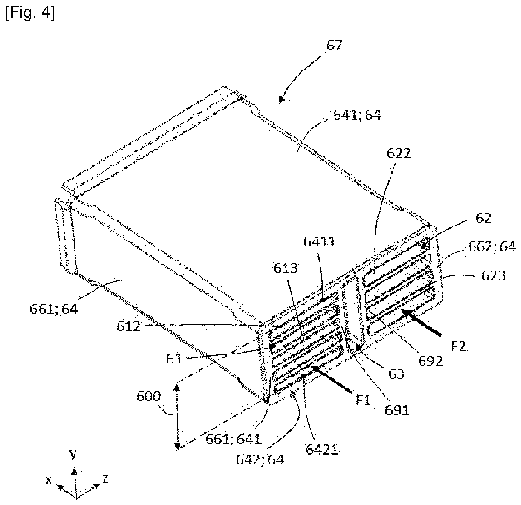

Les figures 3, 4 et 5 détaillent davantage l'arrangement interne du module de traitement thermique 4. La figure 3 illustre une vue en coupe réalisée le long d'un plan 1000 tandis que la figure 4 illustre une coupe réalisée le long d'un plan 2000, lesdits plans étant visibles à la figure 2.

Au sein du module de traitement thermique 4, le troisième compartiment 63 est particulièrement disposé au contact thermique d'au moins le premier compartiment 61. De la sorte, lorsque le deuxième flux F2 est envoyé dans le troisième compartiment 63, le module de traitement thermique 4 est configuré pour mettre en oeuvre un échange thermique entre le premier flux F1, circulant dans le premier compartiment 61, et le deuxième flux F2, circulant dans le troisième compartiment 63.

Selon l'exemple particulier de réalisation illustré, le troisième compartiment 63 est, au moins en partie, disposé entre le premier compartiment 61 et le deuxième compartiment 62. En d'autres termes, le troisième compartiment 63 est au moins partiellement interposé entre le premier compartiment 61 et le deuxième compartiment 62 le long de la troisième direction Oy.

Un tel arrangement s'accompagne de différents avantages selon le mode de fonctionnement mis en oeuvre par le moteur 1 à combustion interne. Lorsque le deuxième flux F2 est dirigé vers le troisième compartiment 63 tel que précédemment exposé, le module de traitement thermique est configuré pour mettre en oeuvre un échange thermique entre le premier flux et le deuxième flux. En revanche, lorsque le deuxième flux F2 est exclusivement dirigé vers le deuxième compartiment 62, un tel arrangement permet de réaliser une isolation thermique au moins partielle du premier flux F1, circulant dans le premier compartiment 61, par rapport au deuxième flux F2. Le troisième compartiment 63 forme alors une couche isolante interposée entre le premier compartiment 61 et le deuxième compartiment 62. Ces différents modes de fonctionnement seront davantage détaillés ci-après.

Le boîtier secondaire 6 comprend au moins une première paroi interne intermédiaire 691 délimitant au moins en partie d'une part le premier compartiment 61 et d'autre part le troisième compartiment 63. Autrement formulé, la première paroi interne intermédiaire 691 est commune au premier compartiment 61 et au troisième compartiment 63. Notamment, la première paroi interne intermédiaire 691 est configurée pour permettre le contact thermique entre le premier compartiment 61 et le troisième compartiment 63. Ainsi de manière préférentielle, le troisième compartiment 63 est accolé au premier compartiment par une paroi, notamment la première paroi interne intermédiaire 691, s'étendant longitudinalement selon l'axe Ox.

Egalement, dans le mode de réalisation illustré, le boîtier secondaire 6 comprend une deuxième paroi interne intermédiaire 692 qui délimite au moins en partie d'une part le troisième compartiment 63 et d'autre part le deuxième compartiment 62. Notamment, la deuxième paroi interne intermédiaire 292 peut être au moins en partie thermiquement isolante selon un mode de réalisation particulier.

Ainsi, dans l'exemple illustré, le premier compartiment 61 s'étend entre la première paroi latérale secondaire 661 et la première paroi interne intermédiaire 691, le deuxième compartiment 62 s'étend entre la deuxième paroi latérale secondaire 662 et la deuxième paroi interne intermédiaire 692 et le troisième compartiment 63 s'étend entre la première paroi interne intermédiaire 691 et la deuxième paroi interne intermédiaire 692.

En l'espèce, la première paroi interne intermédiaire 691 et la deuxième paroi interne intermédiaire 692 s'étendent sensiblement parallèlement l'une à l'autre, le long de la première direction Ox. La première paroi interne intermédiaire 691 est connectée de manière étanche à un pan extrême 680 de la première conduite d'alimentation 681 et/ou de la deuxième conduite d'alimentation 683. A l'inverse, la deuxième paroi interne intermédiaire 692 s'étend en regard de la portion de répartition 685 et/ou de la portion de collecteur 686.

De manière particulière, le troisième compartiment 63 peut comprendre une première extrémité 635 et/ou une deuxième extrémité 636 ouverte(s) de sorte à être fluidiquement relié au deuxième compartiment 62 en amont et en aval selon le sens de circulation du deuxième flux F2.

Le dispositif de contrôle 41 est alors arrangé dans le boîtier secondaire 6 afin de diriger le deuxième flux F2 alternativement dans le deuxième compartiment 62 ou dans le troisième compartiment 63. Avantageusement, le dispositif de contrôle 41 est disposé dans le volume primaire 50 de sorte à en assurer le refroidissement au moins partiel, par l'intermédiaire du fluide de refroidissement FR circulant dans le boîtier primaire 5, et à prévenir sa dégradation du fait des températures élevées du deuxième flux F2.

A titre d'exemple, le dispositif de contrôle 41 peut être disposé au moins en partie dans la deuxième conduite d'alimentation 683, notamment dans la portion de répartition 685. De manière alternative, le dispositif de contrôle 41 peut être au moins partiellement disposé dans la partie centrale 67 du boîtier secondaire 6, par exemple aux abords de la deuxième paroi interne intermédiaire 692 et de la première extrémité 635 du troisième compartiment 63. Alternativement encore, le dispositif de contrôle 41 peut être disposé dans la deuxième conduite d'évacuation 684, notamment dans la portion de collecteur 686.

Le troisième compartiment 63 est dimensionné de sorte à s'étendre sur tout ou l'essentiel d'une hauteur interne 600 du boîtier secondaire 6 comprise entre une première face interne 6411 et une deuxième face interne 6421 de la première paroi secondaire 641 et de la deuxième paroi secondaire 642 respectivement. On entend ainsi par hauteur interne 600 la dimension intérieure du boîtier secondaire 6 mesurée le long de la deuxième direction Oz. De manière particulière, le troisième compartiment 63 s'étend au moins sur une hauteur interne propre au premier compartiment 61.

Le long de la première direction Ox, le troisième compartiment 63 s'étend sur au moins l'essentiel d'une longueur interne 601 du boîtier secondaire 6. La longueur interne 601 du boîtier secondaire 6 est mesurée le long de la première direction Ox, entre une première face extrême interne 6511 et une deuxième face extrême interne 6521 de la première paroi extrêmale secondaire 651 et de la deuxième paroi extrêmale secondaire 652 respectivement. Particulièrement, le troisième compartiment 63 s'étend, le long de la première direction Ox, au moins sur l'essentiel de la partie centrale 67 du boîtier secondaire 6, c'est-à-dire sur plus de 50% de la longueur interne 601.

Ainsi, selon le besoin, d'une part le contact thermique entre le premier flux F1, circulant dans le premier compartiment 61, et le deuxième flux F2, lorsqu'il circule dans le troisième compartiment 63, est maximisé et, d'autre part, l'isolation thermique du premier flux F1, circulant dans le premier compartiment 61, par rapport au deuxième flux F2 lorsque ce dernier circule dans le deuxième compartiment 62, et inversement, est optimisée.

Le long de la troisième direction Oy, le premier compartiment 61, le deuxième compartiment 62 et le troisième compartiment 63 sont respectivement caractérisés par une première largeur 611, une deuxième largeur 621 et une troisième largeur 631. Dans l'exemple illustré, on entend, par « première largeur 611 », la dimension mesurée entre la première paroi latérale secondaire 661 et la première paroi interne intermédiaire 691, par « deuxième largueur 621 », la dimension mesurée entre la deuxième paroi latérale secondaire 662 et la deuxième paroi interne intermédiaire 692 et par « troisième largeur 631 » la dimension comprise entre la première paroi interne intermédiaire 691 et la deuxième paroi interne intermédiaire 692.

Tel que précédemment exposé, le troisième compartiment 63 est notamment configuré de sorte à permettre, selon le mode de fonctionnement mis en oeuvre, l'isolation thermique du premier compartiment 61 par rapport au deuxième compartiment 62, et inversement. A cette fin, le troisième compartiment 63 présente une troisième largeur 631 supérieure à 30% de la première largeur 611 et/ou de la deuxième largeur 621 sans excéder ladite/lesdites première largeur 611 et/ou deuxième largeur 621.

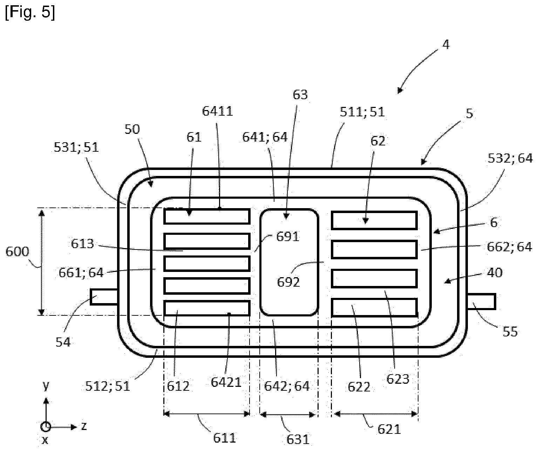

De manière particulière, tel qu'illustré aux figures 4 et 5, le premier compartiment 61 et/ou le deuxième compartiment 62 compren(nent)(d) une pluralité de passages 612, 622 destinés à la circulation du premier flux F1 et du deuxième flux F2 respectivement. Il est entendu que le nombre, les dimensions ou l'orientation des passages 612, 622 illustrés ne sont en rien limitatifs. En l'espèce, le premier compartiment 61 et le deuxième compartiment 62 comprennent une pluralité de passages 612, 622 qui s'étendent longitudinalement selon l'axe Ox.

Dans le premier compartiment 61, des parois intérieures 613 relient la première paroi latérale secondaire 661 à la première paroi interne intermédiaire 691 et délimitent cinq passages 612 du premier flux F1. Ceux-ci s'étendent le long des troisième et première directions Oy, Ox pour l'échange thermique susceptible d'être opéré entre le premier compartiment 61 et le troisième compartiment 63.

Similairement, au sein du deuxième compartiment 62, des parois intérieures 623 relient la deuxième paroi latérale secondaire 662 à la deuxième paroi interne intermédiaire 692 et délimitent quatre passages 622 du deuxième flux F2. Notamment, les passages 612, 622 sont traversant. Ils s'étendent sur l'ensemble de la longueur interne 601 de la portion centrale 67 du boîtier secondaire 6 et débouchent dans les conduites d'alimentation 681, 683 et les conduites d'évacuation 682, 684 du boîtier secondaire 6.

Les figures 1, 6 et 7 illustrent le cheminement des premier flux F1 et deuxième flux F2 dans le moteur 1 à combustion interne et dans le module de traitement thermique 4 selon les différents modes de fonctionnement.

De manière générale, en conditions de roulage, dans le circuit d'admission 2, le premier flux F1 est capté depuis l'extérieur. Le premier flux F1 est comprimé dans le dispositif de compression 21 et en sort à haute pression et à une température plus élevée. Il est ensuite envoyé vers le module de traitement thermique 4 en vue de son pré-refroidissement. Il cède des calories au fluide de refroidissement FR et ressort du module de traitement thermique 4 à haute pression et à une température inférieure. Le premier flux F1 est ensuite envoyé vers l'échangeur de chaleur 24 dans lequel de l'eau, plus froide, capte des calories du premier flux F1 de sorte à en abaisser davantage la température. Le premier flux F1 entre ensuite par la face d'admission 111 dans la culasse 11 et, après combustion, des gaz brûlés sont évacués par la face d'échappement 112 de la culasse 11.

Les gaz brûlés peuvent être envoyés vers la turbine 22 du dispositif de compression 21 afin de l'entraîner, ainsi qu'une roue de compression du dispositif de compression 21, en rotation.

Egalement, les gaz brûlés peuvent être prélevés dans le collecteur d'échappement 13 et envoyé dans le circuit de recirculation 3 dans lequel ils sont constitutifs du deuxième flux F2. Ce deuxième flux F2, haute pression et à très haute température, est envoyé vers le module de traitement thermique 4 afin d'être refroidi avant d'être renvoyé vers le circuit d'amission 2 pour être mélangé avec le premier flux F1. Par exemple, le deuxième flux F2 peut être admis au sein du circuit d'admission 2 au niveau des conduits d'admission et/ou au niveau du répartiteur d'admission 12, c'est-à-dire en aval de l'échangeur de chaleur 24. De manière alternative, le deuxième flux F2 peut être admis dans le circuit d'admission au niveau d'une conduite du circuit d'admission 2 comprise entre le module de traitement thermique 4 et l'échangeur de chaleur 24, tel qu'illustré.

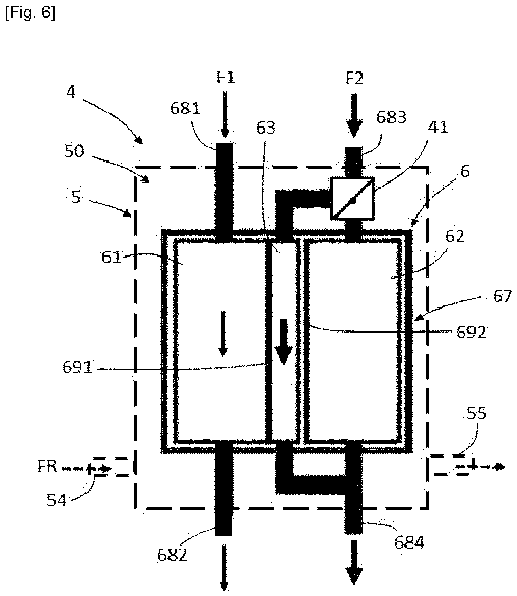

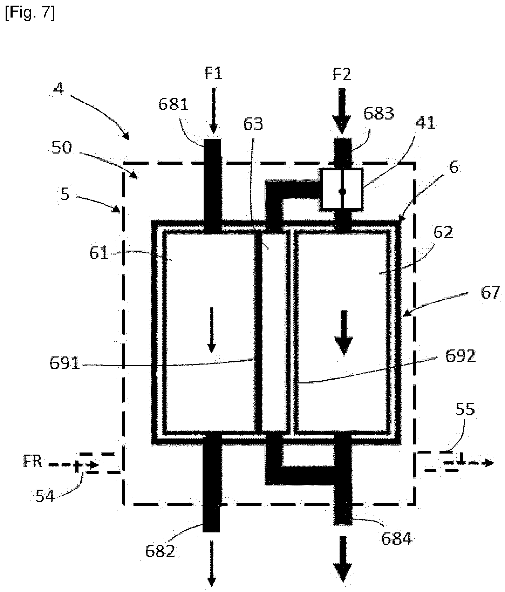

Les figures 6 et 7 illustrent les différents échanges thermiques mis en oeuvre dans le module de traitement thermique 4 selon différents modes de fonctionnement du moteur.

La figure 6 illustre un premier mode de fonctionnement du moteur 1 à combustion interne dans lequel celui-ci est froid. Lors du démarrage à froid du véhicule 100, il est requis d'avoir une montée en température rapide du moteur, aussi il est nécessaire d'envoyer dans les conduites d'admission des gaz plus chauds, notamment le premier flux F1 et le deuxième flux F2, afin de favoriser une montée en température plus rapide du carter-cylindres du moteur 1 à combustion interne.

Aussi, la circulation du fluide de refroidissement FR est interrompue, notamment au niveau du module thermique 4, de sorte à n'assurer le refroidissement ni du premier flux F1 ni du deuxième flux F2 au sein dudit module de traitement thermique 4. Egalement, le dispositif de contrôle 41 est déplacé afin de diriger le deuxième flux F2 vers le troisième compartiment 63 afin que le deuxième flux F2, plus chaud que le premier flux F1 circulant dans premier compartiment 61, cède des calories à celui-ci.

En d'autres termes, selon ce premier mode de fonctionnement au démarrage du moteur dit froid, les capacités d'échange des premier et deuxième échangeurs thermiques sont limitées. Seul le troisième échangeur thermique est configuré pour mettre en oeuvre un échange thermique efficace entre le premier flux F1 et le deuxième flux F2.

Le premier flux F1 sort ainsi du module de traitement thermique 4 à une température plus élevée et est envoyé directement vers la face d'admission 111. Un dispositif de vanne 14 du moteur 1 à combustion interne, compris dans le circuit d'admission 2 et configuré pour envoyer sélectivement le premier flux F1 vers l'échangeur de chaleur 24 ou pour le contourner, assure, dans le présent mode de fonctionnement, le contournement dudit échangeur de chaleur 24. De la sorte, le premier flux n'est ni pré-refroidi ni refroidi, tel que précédemment exposé, dans le module de traitement thermique 4 et dans l'échangeur de chaleur 24 respectivement, et il est envoyé à haute température vers le répartiteur d'admission 12 par exemple.

Parallèlement, le deuxième flux F2 est envoyé vers le circuit d'admission 2, et, similairement au premier flux, contourne l'échangeur de chaleur 24 pour être directement envoyé vers la face d'admission 111.

La figure 7 illustre un deuxième mode de fonctionnement du moteur 1 à combustion interne. Dans un tel mode de fonctionnement, le moteur 1 à combustion interne est chaud et il est nécessaire d'assurer le refroidissement du premier flux F1 et du deuxième flux F2 en amont de la face d'admission 111. Un tel mode de fonctionnement est notamment mis en oeuvre lors des phases de roulage du véhicule 100 tel que précédemment décrites.

Dans un tel mode de fonctionnement, le fluide de refroidissement FR circule dans le boîtier primaire 5. Le premier flux F1 circule dans le premier compartiment 61 tandis que le dispositif de contrôle 41 est déplacé afin d'envoyer le deuxième flux F2 vers le deuxième compartiment 62.

Dans le premier compartiment 61, le premier flux F1, plus chaud, cède des calories au fluide de refroidissement FR et ressort refroidi du module de traitement thermique 4. Le premier flux F1 est ensuite dirigé vers l'échangeur de chaleur 24 par le dispositif de vanne 14. Dans l'échangeur de chaleur 24, le premier flux F1 cède des calories à l'eau glycolée, plus froide, puis est renvoyé vers la face d'admission 111.

Dans le deuxième compartiment 62, le deuxième flux F2 cède des calories au fluide de refroidissement FR et ressort refroidi du module de traitement thermique 4. Le deuxième flux F2 rejoint ensuite le premier flux dans le circuit d'admission 2 au niveau de l'une des alternatives précédemment exposé puis est envoyé vers la face d'admission 111 de la culasse 11.

En d'autres termes, dans un tel mode de fonctionnement, les capacités d'échange des premier et deuxième échangeurs thermiques sont maximisées, tandis que le troisième échangeur thermique est inactif.

De la sorte, le troisième compartiment 63 ainsi interposé, notamment le long de la troisième direction Oy, entre le premier compartiment 61 et le deuxième compartiment 62 constitue une couche au moins partiellement thermiquement isolante. En d'autres termes, le troisième compartiment 63 assure, au moins en partie l'isolation thermique du premier compartiment 61 par rapport au deuxième compartiment 62, et inversement. De la sorte, un éventuel échange thermique entre le premier flux F1 et le deuxième flux F2, plus chaud, est limité, voire nul.

Egalement, le module de traitement thermique 4 selon l'invention limite avantageusement la surface de contact thermique entre le deuxième flux F2 circulant dans le deuxième compartiment 62, c'est-à-dire le flux EGR, et le fluide de refroidissement FR, prévenant ainsi la production d'éventuels encrassements colmatants classiquement observés lorsqu'un flux EGR subit un refroidissement trop important. En l'espèce, la limitation de la surface de contact thermique résulte de l'accolement du troisième compartiment 63 et du deuxième compartiment 62 qui partagent au moins une paroi commune, ici la deuxième paroi interne intermédiaire 692.

La présente invention concerne également un procédé de fonctionnement du moteur 1 à combustion interne comprenant le module de traitement thermique 4 selon l'invention, le procédé comprenant au moins :
- une première étape de fonctionnement du moteur 1 à combustion interne dans laquelle le dispositif de contrôle 41 est configuré pour diriger le deuxième flux F2, c'est-à-dire les gaz EGR, vers le troisième compartiment 63, et
- une deuxième étape de fonctionnement du moteur 1 à combustion interne dans laquelle le dispositif de contrôle 41 est configuré pour diriger le deuxième flux F2 vers le deuxième compartiment 62 à l'atteinte d'un seuil de température prédéterminé, notamment à l'atteinte d'un seuil de température prédéterminé du moteur 1 à combustion interne.

Il est entendu que lesdites étapes s'effectuent successivement l'une à l'autre, et non simultanément.

La présente invention propose ainsi un module de traitement thermique pour moteur à combustion interne selon la revendication 1.

La présente invention ne saurait toutefois se limiter aux moyens et configurations décrits et illustrés ici et elle s'étend également à tout moyen ou configuration couverts par les revendications ci-jointes. En particulier la forme et les dimensions des compartiments, ainsi que le nombre de passages peuvent être modifiés sans nuire à l'invention dans la mesure où ils remplissent in fine les fonctionnalités décrites et illustrées dans le présent document, et sont couverts par les revendications jointes.

## Revendications

1. Module de traitement thermique (4) pour moteur (1) à combustion interne, le module de traitement thermique (4) comprenant un boîtier primaire (5) délimitant un volume primaire (50), destiné à la circulation d'un fluide de refroidissement (FR), et un boîtier secondaire (6) s'étendant au moins en partie dans le volume primaire (50) et incluant une pluralité de compartiments (61, 62,63), tel que:
- le boîtier secondaire (6) comprend un premier compartiment (61) destiné à mettre en oeuvre un échange thermique entre un premier flux (F1), notamment un flux de gaz d'admission, et le fluide de refroidissement (FR) ;
- le boîtier secondaire (6) comprend un deuxième compartiment (62) destiné à mettre en oeuvre un échange thermique entre un deuxième flux (F2) de gaz EGR, et le fluide de refroidissement (FR) ;
- le boîtier secondaire (6) comprend un troisième compartiment (63) destiné à la circulation du deuxième flux (F2) de gaz EGR et apte à assurer une isolation thermique du premier compartiment (61) vis-à-vis du deuxième compartiment (62) de sorte à atteindre un seuil de température prédéterminé;
- le module de traitement thermique (4) comprend un dispositif de contrôle (41) de la circulation du deuxième flux (F2) de gaz EGR configuré pour diriger sélectivement le deuxième flux (F2) dans le troisième compartiment (63) ou dans le deuxième compartiment (62).

2. Module de traitement thermique (4) selon la revendication précédente, dans lequel le troisième compartiment (63) est disposé au contact thermique d'au moins le premier compartiment (61).

3. Module de traitement thermique (4) selon l'une des revendications précédentes, dans lequel le troisième compartiment (63) est interposé entre le premier compartiment (61) et le deuxième compartiment (62).

4. Module de traitement thermique (4) selon l'une des revendications précédentes, dans lequel le troisième compartiment (63) comprend une première extrémité (635) et/ou une deuxième extrémité (636) ouverte(s), le troisième compartiment (63) étant fluidiquement relié au deuxième compartiment (62) en amont et en aval selon un sens de circulation du deuxième flux (F2).

5. Module de traitement thermique (4) selon l'une des revendications précédentes, dans lequel le boîtier secondaire (6) comprend d'une part une première conduite d'alimentation (681) et une première conduite d'évacuation (682), fluidiquement reliées au premier compartiment (61), et d'autre part une deuxième conduite d'alimentation (683) et une deuxième conduite d'évacuation (684), fluidiquement reliées au deuxième compartiment (62) et au troisième compartiment (63).

6. Module de traitement thermique (4) selon la revendication précédente, dans lequel la deuxième conduite d'alimentation (683) est reliée au deuxième compartiment (62) et au troisième compartiment (63) par une portion de répartition (685) et/ou la deuxième conduite d'évacuation (684) est reliée au deuxième compartiment (62) et au troisième compartiment (63) par une portion de collecteur (686).

7. Module de traitement thermique (4) selon l'une des revendications précédentes, dans lequel le boîtier secondaire (6) comprend au moins une première paroi interne intermédiaire (691) délimitant au moins en partie d'une part le premier compartiment (61) et d'autre part le troisième compartiment (63).

8. Module de traitement thermique (4) selon l'une des revendications précédentes, dans lequel le boîtier secondaire (6) comprend au moins une première paroi secondaire (641) et une deuxième paroi secondaire (642), le troisième compartiment (63) s'étendant sur tout ou l'essentiel d'une hauteur interne (600) du boîtier secondaire (6) comprise entre une première face interne (6411) et une deuxième face interne (6421) de la première paroi secondaire (641) et de la deuxième paroi secondaire (642) respectivement.

9. Module de traitement thermique (4) selon l'une des revendications précédentes, dans lequel le boîtier secondaire (6) comprend au moins une première paroi extrêmale secondaire (651) et une deuxième paroi extrémale secondaire (652), le troisième compartiment (63) s'étendant sur au moins l'essentiel d'une longueur interne (601) du boîtier secondaire (6) comprise entre une première face extrême interne (6511) et une deuxième face extrême interne (6521) de la première paroi extrêmale secondaire (651) et de la deuxième paroi extrêmale secondaire (652) respectivement.

10. Module de traitement thermique (4) selon l'une des revendications précédentes, dans lequel le premier compartiment (61), le deuxième compartiment (62) et le troisième compartiment (63) sont respectivement **caractérisés par** une première largeur (611), une deuxième largeur (621) et une troisième largeur (631), mesurées le long d'une direction (Oy), la troisième largeur (631) étant supérieure à 30% de la première largeur (611) et/ou de la deuxième largeur (621) sans excéder ladite/lesdites première largeur (611) et/ou deuxième largeur (621).

11. Module de traitement thermique (4) selon l'une des revendications précédentes, dans lequel le premier compartiment (61) et/ou le deuxième compartiment (62) comprend une pluralité de passages (612, 622) destinés à la circulation du premier flux (F1) et du deuxième flux (F2) respectivement.

12. Module de traitement thermique (4) selon l'une des revendications précédentes, dans lequel le dispositif de contrôle (41) est disposé dans le volume primaire (50), notamment dans le boîtier secondaire (6) disposé dans le volume primaire (50).

13. Module de traitement thermique (4) selon l'une des revendications précédentes, dans lequel le dispositif de contrôle (41) comprend un volet monté pivotant.

14. Moteur (1) à combustion interne comprenant un module de traitement thermique (4) selon l'une quelconque des revendications précédentes.

15. Véhicule (100) automobile comprenant un module de traitement thermique (4) selon l'une des revendications 1 à 13 et/ou un moteur (1) à combustion interne selon la revendication 14.

16. Procédé de fonctionnement d'un moteur (1) à combustion interne selon la revendication 14 comprenant un module de traitement thermique (4) selon l'une quelconque des revendications 1 à 13, le procédé comprenant au moins :
- une première étape de fonctionnement du moteur (1) à combustion interne dans laquelle le dispositif de contrôle (41) est configuré pour diriger le deuxième flux (F2) de gaz EGR vers le troisième compartiment (63), et
- une deuxième étape de fonctionnement du moteur (1) à combustion interne dans laquelle le dispositif de contrôle (41) est configuré pour diriger le deuxième flux (F2) de gaz EGR vers le deuxième compartiment (62) pour l'atteinte d'un seuil de température prédéterminé.

## Patentansprüche

1. Wärmebehandlungsmodul (4) für einen Verbrennungsmotor (1), wobei das Wärmebehandlungsmodul (4) ein primäres Gehäuse (5) umfasst, das ein primäres Volumen (50) begrenzt, das zur Zirkulation eines Kühlmittels (FR) bestimmt ist, und ein sekundäres Gehäuse (6), das sich wenigstens teilweise in dem primären Volumen (50) erstreckt und mehrere Kammern (61, 62, 63) aufweist, derart, dass:
- das sekundäre Gehäuse (6) eine erste Kammer (61) umfasst, die dazu bestimmt ist, einen Wärmeaustausch zwischen einem ersten Strom (F1), insbesondere einem Einlassgasstrom, und dem Kühlmittel (FR) durchzuführen;
- das sekundäre Gehäuse (6) eine zweite Kammer (62) umfasst, die dazu bestimmt ist, einen Wärmeaustausch zwischen einem zweiten Strom (F2) von AGR-Gas und dem Kühlmittel (FR) durchzuführen;
- das sekundäre Gehäuse (6) eine dritte Kammer (63) umfasst, die zur Zirkulation des zweiten Stroms (F2) von AGR-Gas bestimmt ist und geeignet ist, eine Wärmeisolation der ersten Kammer (61) gegenüber der zweiten Kammer (62) sicherzustellen, um einen vorbestimmten Temperaturschwellenwert zu erreichen;
- das Wärmebehandlungsmodul (4) eine Vorrichtung zur Steuerung (41) der Zirkulation des zweiten Stroms (F2) von AGR-Gas umfasst, die dafür ausgelegt ist, den zweiten Strom (F2) selektiv in die dritte Kammer (63) oder in die zweite Kammer (62) zu lenken.

2. Wärmebehandlungsmodul (4) nach dem vorhergehenden Anspruch, wobei die dritte Kammer (63) in thermischem Kontakt mindestens mit der ersten Kammer (61) angeordnet ist.

3. Wärmebehandlungsmodul (4) nach einem der vorhergehenden Ansprüche, wobei die dritte Kammer (63) zwischen der ersten Kammer (61) und der zweiten Kammer (62) angeordnet ist.

4. Wärmebehandlungsmodul (4) nach einem der vorhergehenden Ansprüche, wobei die dritte Kammer (63) ein offenes erstes Ende (635) und/oder ein offenes zweites Ende (636) umfasst, wobei die dritte Kammer (63) mit der zweiten Kammer (62) stromaufwärts und stromabwärts in einer Strömungsrichtung des zweiten Stroms (F2) in Fluidverbindung steht.

5. Wärmebehandlungsmodul (4) nach einem der vorhergehenden Ansprüche, wobei das sekundäre Gehäuse (6) einerseits eine erste Zuführleitung (681) und eine erste Abführleitung (682), die mit der ersten Kammer (61) in Fluidverbindung stehen, und andererseits eine zweite Zuführleitung (683) und eine zweite Abführleitung (684), die mit der zweiten Kammer (62) und mit der dritten Kammer (63) in Fluidverbindung stehen, umfasst.

6. Wärmebehandlungsmodul (4) nach dem vorhergehenden Anspruch, wobei die zweite Zuführleitung (683) mit der zweiten Kammer (62) und mit der dritten Kammer (63) durch einen Verteilungsabschnitt (685) verbunden ist und/oder die zweite Abführleitung (684) mit der zweiten Kammer (62) und mit der dritten Kammer (63) durch einen Kollektorabschnitt (686) verbunden ist.

7. Wärmebehandlungsmodul (4) nach einem der vorhergehenden Ansprüche, wobei das sekundäre Gehäuse (6) mindestens eine erste innere Zwischenwand (691) umfasst, die wenigstens teilweise einerseits die erste Kammer (61) und andererseits die dritte Kammer (63) begrenzt.

8. Wärmebehandlungsmodul (4) nach einem der vorhergehenden Ansprüche, wobei das sekundäre Gehäuse (6) mindestens eine erste sekundäre Wand (641) und eine zweite sekundäre Wand (642) umfasst, wobei sich die dritte Kammer (63) über die Gesamtheit oder den wesentlichen Teil einer inneren Höhe (600) des sekundären Gehäuses (6) erstreckt, die sich zwischen einer ersten Innenseite (6411) und einer zweiten Innenseite (6421) der ersten sekundären Wand (641) bzw. der zweiten sekundären Wand (642) befindet.

9. Wärmebehandlungsmodul (4) nach einem der vorhergehenden Ansprüche, wobei das sekundäre Gehäuse (6) mindestens eine erste sekundäre Endwand (651) und eine zweite sekundäre Endwand (652) umfasst, wobei sich die dritte Kammer (63) über wenigstens den wesentlichen Teil einer inneren Länge (601) des sekundären Gehäuses (6) erstreckt, die sich zwischen einer ersten inneren Endseite (6511) und einer zweiten inneren Endseite (6521) der ersten sekundären Endwand (651) bzw. der zweiten sekundären Endwand (652) befindet.

10. Wärmebehandlungsmodul (4) nach einem der vorhergehenden Ansprüche, wobei die erste Kammer (61), die zweite Kammer (62) und die dritte Kammer (63) durch eine erste Breite (611), eine zweite Breite (621) bzw. eine dritte Breite (631) gekennzeichnet sind, gemessen entlang einer Richtung (Oy), wobei die dritte Breite (631) größer als 30 % der ersten Breite (611) und/oder der zweiten Breite (621) ist, ohne die erste Breite (611) und/oder die zweite Breite (621) zu überschreiten.

11. Wärmebehandlungsmodul (4) nach einem der vorhergehenden Ansprüche, wobei die erste Kammer (61) und/oder die zweite Kammer (62) mehrere Durchlässe (612, 622) umfassen, die für die Zirkulation des ersten Stroms (F1) bzw. des zweiten Stroms (F2) bestimmt sind.

12. Wärmebehandlungsmodul (4) nach einem der vorhergehenden Ansprüche, wobei die Steuervorrichtung (41) im primären Volumen (50) angeordnet ist, insbesondere im sekundären Gehäuse (6), das im primären Volumen (50) angeordnet ist.

13. Wärmebehandlungsmodul (4) nach einem der vorhergehenden Ansprüche, wobei die Steuervorrichtung (41) eine schwenkbar angebrachte Klappe umfasst.

14. Verbrennungsmotor (1), welcher ein Wärmebehandlungsmodul (4) nach einem der vorhergehenden Ansprüche umfasst.

15. Kraftfahrzeug (100), welches ein Wärmebehandlungsmodul (4) nach einem der Ansprüche 1 bis 13 und/oder einen Verbrennungsmotor (1) nach Anspruch 14 umfasst.

16. Verfahren zum Betrieb eines Verbrennungsmotors (1) nach Anspruch 14, der ein Wärmebehandlungsmodul (4) nach einem der Ansprüche 1 bis 13 umfasst, wobei das Verfahren mindestens umfasst:
- einen ersten Schritt des Betriebs des Verbrennungsmotors (1), in dem die Steuervorrichtung (41) dafür ausgelegt ist, den zweiten Strom (F2) von AGR-Gas zur dritten Kammer (63) zu lenken, und
- einen zweiten Schritt des Betriebs des Verbrennungsmotors (1), in dem die Steuervorrichtung (41) dafür ausgelegt ist, den zweiten Strom (F2) von AGR-Gas zum Erreichen eines vorbestimmten Temperaturschwellenwertes zur zweiten Kammer (62) zu lenken.

## Claims

1. Heat treatment module (4) for an internal combustion engine (1), the heat treatment model (4) comprising a primary casing (5) delimiting the primary volume (50), intended for circulation of a cooling fluid (FR), and a secondary casing (6) extending at least in part in the primary volume (50) and including a plurality of compartments (61, 62, 63), such that:
- the secondary casing (6) comprises a first compartment (61) intended to implement a heat exchange between a first stream (F1), in particular an intake gas stream, and the cooling fluid (FR);
- the secondary casing (6) comprises a second compartment (62) intended to implement a heat exchange between a second, EGR gas stream (F2) and the cooling fluid (FR);
- the secondary casing (6) comprises a third compartment (63) intended for the circulation of the second, EGR gas stream (F2) and able to ensure thermal insulation the first compartment (61) with respect to the second compartment (62) so as to reach a predetermined temperature threshold;
- the heat treatment module (4) comprises a device (41) for controlling the circulation of the second, EGR gas stream (F2) that is configured to selectively direct the second stream (F2) into the third compartment (63) or into the second compartment (62).

2. Heat treatment module (4) according to the preceding claim, wherein the third compartment (63) is disposed in thermal contact with at least the first compartment (61).

3. Heat treatment module (4) according to either of the preceding claims, wherein the third compartment (63) is interposed between the first compartment (61) and the second compartment (62).

4. Heat treatment module (4) according to one of the preceding claims, wherein the third compartment (63) comprises an open first end (635) and/or second end (636), the third compartment (63) being fluidically connected to the second compartment (62) upstream and downstream in a direction of circulation of the second stream (F2).

5. Heat treatment module (4) according to one of the preceding claims, wherein the secondary casing (6) comprises on the one hand a first supply duct (681) and a first discharge duct (682), which are fluidically connected to the first compartment (61), and on the other hand a second supply duct (683) and a second discharge duct (684), which are fluidically connected to the second compartment (62) and to the third compartment (63).

6. Heat treatment module (4) according to the preceding claim, wherein the second supply duct (683) is connected to the second compartment (62) and to the third compartment (63) by a distribution portion (685) and/or the second discharge duct (684) is connected to the second compartment (62) and to the third compartment (63) by a collector portion (686).

7. Heat treatment module (4) according to one of the preceding claims, wherein the secondary casing (6) comprises at least a first intermediate internal wall (691) at least partially delimiting on the one hand the first compartment (61) and on the other hand the third compartment (63).

8. Heat treatment module (4) according to one of the preceding claims, wherein the secondary casing (6) comprises at least a first secondary wall (641) and a second secondary wall (642), the third compartment (63) extending over all or the majority of an internal height (600) of the secondary casing (6) that is comprised between a first internal face (6411) and a second internal face (6421) of the first secondary wall (641) and of the second secondary wall (642) respectively.

9. Heat treatment module (4) according to one of the preceding claims, wherein the secondary casing (6) comprises at least a first secondary end wall (651) and a second secondary end wall (652), the third compartment (63) extending over at least the majority of an internal length (601) of the secondary casing (6) that is comprised between a first internal end face (6511) and a second internal end face (6521) of the first secondary end wall (651) and of the second secondary end wall (652) respectively.

10. Heat treatment module (4) according to one of the preceding claims, wherein the first compartment (61), the second compartment (62) and the third compartment (63) are respectively **characterized by** a first width (611), a second width (621) and a third width (631), which are measured along a direction (Oy), the third width (631) being greater than 30% of the first width (611) and/or of the second width (621) without exceeding said first width (611) and/or second width (621).

11. Heat treatment module (4) according to one of the preceding claims, wherein the first compartment (61) and/or the second compartment (62) comprises a plurality of passages (612, 622) intended for the circulation of the first stream (F1) and of the second stream (F2) respectively.

12. Heat treatment module (4) according to one of the preceding claims, wherein the control device (41) is disposed in the primary volume (50), in particular in the secondary casing (6) disposed in the primary volume (50).

13. Heat treatment module (4) according to one of the preceding claims, wherein the control device (41) comprises a flap that is mounted so as to pivot.

14. Internal combustion engine (1) comprising a heat treatment module (4) according to any one of the preceding claims.

15. Motor vehicle (100) comprising a heat treatment module (4) according to one of Claims 1 to 13 and/or an internal combustion engine (1) according to Claim 14.

16. Method for operating an internal combustion engine (1) according to Claim 14 comprising a heat treatment module (4) according to any one of Claims 1 to 13, the method comprising at least:
- a first step of operating the internal combustion engine (1), in which the control device (41) is configured to direct the second, EGR gas stream (F2) towards the third compartment (63), and
- a second step of operating the internal combustion engine (1), in which the control device (41) is configured to direct the second, EGR gas stream (F2) towards the second compartment (62) in order to reach a predetermined temperature threshold.
